# EUROPÄISCHE PATENTANMELDUNG

(11) **EP 1 600 568 A1**
(43) Veröffentlichungstag der Anmeldung: **30.11.2005**
(21) Anmeldenummer: 05011327.3
(22) Anmeldetag: 25.05.2005
(51) Int. Cl.: E03F 3/04, F16L 25/00, F16L 13/11, F16L 57/00, F16L 21/02

(54) **Erdverlegbare Rohrleitung mit Wurzelschutz**

(30) Priorität: 27.05.2004 DE 102004026013
(71) Anmelder: Theodor Cordes GmbH & Co. KG, 48308 Senden-Bösensell (DE)
(72) Erfinder: Schlautmann, Frank, 48147 Münster (DE)
(74) Vertreter: Habbel, Ludwig

(57) **Zusammenfassung**

Die Erfindung bezieht sich auf eine Erdverlegbare Rohrleitung (1), mit wenigstens zwei Rohrleitungsabschnitten (2), zwischen denen sich eine Nut (8) erstreckt, wobei innerhalb der Fuge ein wurzelhemmend ausgestaltetes Zusatz-Bauteil (3) angeordnet ist, wobei das Zusatz-Bauteil (3) - wie eine Dichtung (4) oder wie ein Last- oder Druckübertragungselement - vorschlagsgemäß einkomponentig aus ein- und demselben Werkstoff besteht und mit einem gegen Auswaschungen weitgehend beständigen Zusatz versehen ist.

## Beschreibung

Die Erfindung betrifft eine erdverlegbare Rohrleitung nach dem Oberbegriff des Anspruchs 1.

Aus der Praxis ist bekannt, dass ungewollter Wurzeleinwuchs ein großes Problem im Rohrleitungsbau darstellt, da er ungewollte In- und Exfiltrationen hervorrufen kann. Häufig erfolgt der Wurzeleinwuchs im Verbindungsbereich zwischen zwei Rohrleitungsabschnitten. Hierdurch wird die Rohrverbindung und damit die gesamte Rohrleitung undicht und durch Einrieseln von Erdreich sowie durch den weiteren Wurzelwuchs kann die Rohrleitung in diesem Bereich verstopfen. Nachteilig ist weiterhin einerseits, dass durch die Undichtigkeit eine Kontamination des umgebenden Erdreichs mit den in der Rohrleitung geführten Medien nicht auszuschließen ist, und andererseits, dass eindringendes Fremdwasser die der Rohrleitung nachgeschalteten Kläranlagen belastet. Wirtschaftlich ist nachteilig, dass die Beseitigung der Undichtigkeiten mit einem erheblichen Arbeits- und finanziellem Aufwand verbunden ist.

Aus der DE 20 2004 011 702 U1 ist es bekannt, aus Ortbeton einen Infrastruktur-Kanal mit großem freien Innenquerschnitt zu schaffen, um darin Rohrleitungen - unter anderem vor Wurzeln geschützt - zu verlegen. Der mit der Erstellung des Infrastruktur-Kanals verbundene Aufwand ist wirtschaftlich und technologisch sowie vom Platzbedarf her nachteilig.

Aus der DE 33 29 100 A1 ist es bekannt, eine Rohrleitung in einer herbizidhaltigen Zone zu verlegen, bevorzugt in einer herbizidhaltigen Sandbettung, um so die Rohrleitung gegen das Eindringen von Pflanzenwurzeln zu schützen. Dabei ist nachteilig, dass ein vergleichsweise großes Materialvolumen mit Herbiziden versehen wird, welches nämlich die gesamte Rohrleitung umgibt. Da Herbizide in nicht unerheblichem Ausmaß aus Sand ausgewaschen werden können, ist bei Durchfeuchtung des Bodens, beispielsweise aufgrund von Regenfällen, ein erheblicher Eintrag der Herbizige in die Umwelt nicht auszuschließen und sogar sehr wahrscheinlich. Dies stellt sowohl eine unerwünschte Beeinträchtigung der Umwelt dar als auch eine Reduzierung der wurzelhemmenden Wirkung des die Rohrleitung umgebenden Materials

Aus der nachveröffentlichten EP 1 477 718 A2 ist eine Abdichtung an Betonrohren und Schachtbauwerken bekannt, die zwei aus unterschiedlich harten Materialien bestehende Abschnitte innerhalb ihres Querschnitts aufweist. Es kann vorgesehen sein, dem weicheren und/oder dem härteren Material ein chemisch oder biologisch wirksames Additiv zuzusetzen, um die Widerstandskraft der Dichtung gegen aggressiven Medien zu erhöhen, wobei auch Wurzeln als ein solches aggressives Medium angesehen werden.

Bauteile mit unterschiedlichen Abschnitten, wie die vorbeschriebenen Abdichtungen gemäß der EP 1 477 718 A2, werden im Rahmen des vorliegenden Vorschlags je nach Anzahl der Abschnitte als "zweikomponentig" oder "mehrkomponentig" bezeichnet, da sie zwei oder mehrere, zunächst getrennte und zu einer gemeinsamen Abdichtung verbundene Komponenten mit unterschiedlichen Zusammensetzungen aufweisen. Die Verbindung der Komponenten kann beispielsweise durch Formschluss wie bei einem Nut-Feder-System, durch Verklebung oder durch Koextrusion erfolgen. Die Abschnitte bestehen aus grundsätzlich ähnlichen, aber doch unterschiedlichen Materialien. Jede "Komponente" kann dabei selbst aus mehreren Stoffen bestehen, beispielsweise einem Elastomer mit mehreren beigemischten Stoffen. Die Unterschiedlichkeit der beiden Komponenten kann hauptsächlich in der unterschiedlichen Zusammensetzung der Materialien bestehen, also der chemischen Zusammensetzung bzw. Formulierung der Materialien, z. B. zum Zwecke unterschiedlicher Farbgebung oder Wirkstoffinhalte, und / oder die beiden Komponenten können hauptsächlich unterschiedliche physikalische Eigenschaften aufweisen, z. B. hinsichtlich ihrer Härte.

Im Unterschied zu derartigen "zweikomponentigen" Bauteilen werden im Rahmen des vorliegenden Vorschlags solche Bauteile als "einkomponentig" bezeichnet, die aus einem im wesentlichen homogenen Werkstoff bestehen, der seinerseits aus mehreren Stoffen bestehen kann, beispielsweise einem Elastomer mit mehreren beigemischten Stoffen.

Angesichts der harten und weichen Komponenten der gemäß der EP 1 477 718 A2 vorgeschlagenen zweikomponentigen Abdichtung kann in der Praxis das Problem auftreten, dass eine bestimmte Verformungscharakteristik der weichen Komponente, die baurechtlich für eine Abdichtung gefordert sein kann, durch die harte Komponente beeinträchtigt wird. Dies ist insbesondere dann nicht auszuschließen, wenn die harte Komponente die weiche Kompoente stützt und sich die weiche Komponente dementsprechend in Nähe der harten Komponente "härter" verhält als wenn derselbe Dichtungsprofilquerschnitt aus ausschließlich weichem Material gebildet wäre. Es kann daher gegebenenfalls nicht über den gesamten Querschnitt, in welchem weiches Material vorgesehen ist, das für eine zuverlässige Abdichtung gewünschte "weiche" Materialverhalten sichergestellt werden.

Für die baurechtlichen Zulassungen von Bauelementen - wie z. B. für einen Dichtungsring einer Rohrleitung -wird jeweils ein bestimmter Werkstoff geprüft. Ein zweikornponentiges Bauteil, wie z. B. ein aus zwei koextrudierten Materialien bestehender Dichtungsring, macht daher zwei Materialprüfungen erforderlich. Bei zwei- oder mehrkomponentigen Bauelementen ist demzufolge nachteilig, dass die Kosten für die baurechtliche Zulassung deutlich höher sind als für ein "einkomponentiges" Bauelement und mit der Anzahl der unterschiedlichen Komponenten steigen.

Im Rahmen des vorliegenden Vorschlages werden nicht nur solche Bauten als "Rohrleitung" bezeichnet, die zum Führen von Fluiden dienen, wie beispielsweise Gas- oder Wasserrohre sowie Abwasserkanäle und dergleichen, die sämtlich etwa horizontal verlaufen, sondern es werden unter dem Begriff der "Rohrleitung" auch Schachtbauwerke verstanden, also im wesentlichen senkrecht angeordnete Bauwerke, die beispielsweise Personal den Zugang zu einem Rohrleitungsbauwerk in Form eines der vorgenannten Gas-, Wasser- oder Abwasserrohre ermöglichen, beispielsweise zu Wartungs-, Inspektions- oder Reinigungsarbeiten.

Die einzelnen Rohrleitungsabschnitte können axial, also längs aneinander anschließen, oder sie können etwa Y-förmig oder etwa T-förmig wie beispielsweise bei Hausanschlüssen aneinanderstoßen. Sie können gleiche oder unterschiedliche Durchmesser aufweisen, und beispielsweise aus Metall, aus "Guss", aus Beton, aus Polymerbeton, aus Kunststoff oder aus keramischem Material bestehen, und es können Zusatzbauteile vorgesehen sein wie beispielsweise elastomere Dichtungsringe oder Druck-Übertragungsringe zwischen den Abschnitten einer horizontal verlaufenden Rohrleitung, oder wie beispielsweise aus Holz oder aus Hartschaum bestehende Last-Übertragungsringe zwischen den einzelnen Rohrleitungsabschnitten eines Schachtbauwerkes.

Der Erfindung liegt die Aufgabe zugrunde, eine gattungsgemäße Rohrleitung dahingehend zu verbessern, dass deren wurzelhemmende Ausgestaltung möglichst wirtschaftlich und mit einer möglichst guten Schnonung der Umwelt ermöglicht wird. Weiterhin liegt der Erfindung die Aufgabe zugrunde, ein ringförmiges Rohrleitungs-Bauteil zu schaffen, welches eine derartige Rohrleitung ermöglicht.

Diese Aufgabe wird durch eine Rohrleitung mit den Merkmalen des Anspruchs 1 und durch ein Rohrleitungs-Bauteil mit den Merkmalen des Anspruchs 19 gelöst.

Die Erfindung schlägt mit anderen Worten vor, die Rohrleitung durch Verwendung eines einkomponentigen Zusatz-Bauteils wurzelhemmend auszugestalten. Die Nachteile zweikomponentiger Zusatz-Bauteile können dadurch vermieden werden. Gleichzeitig wird vorgeschlagen, das Auswaschen eines wurzelhemmenden Zusatzes dadurch zu reduzieren, dass ein gegen Auswaschungen weitgehend beständiger Zusatz verwendet wird. Handelsübliche wurzelhemmende Stoffe ermöglichen gegenüber anderen, vergleichbar wurzelhemmend wirksamen Stoffen eine deutlich bessere Beständigkeit gegen Auswaschen, z. B. eine zwischen 25-fach und 220-fach geringere Auswaschrate.

Es ist bekannt, in den Verbindungsbereichen jeweils zweier Rohrleitungsabschnitte die Elastomerdichtungsprofile des einen oder die damit zusammenwirkenden Flächen des anderen Rohrleitungsabschnitts mit einem Gleitmittel zu versehen. Vorschlagsgemäß kann vorgesehen sein, diesem Gleitmittel einen wurzelhemmenden Stoff beizumischen, so dass hierdurch eine wurzelhemmende Ausgestaltung insbesondere des Verbindungsbereichs zwischen zwei Rohrleitungsabschnitten bewirkt wird.

Vorteilhaft kann ein wurzelhemmender Stoff fein verteilt im Zusatz-Bauteil vorliegen, beispielsweise indem dieser Stoff während der Produktion beigemischt wird. Abrieb an der Oberfläche des Zusatz-Bauteils, wie er z. B. während des Transports oder der Lagerung des Zusatz-Bauteils nicht auszuschließen ist oder bei der Monatge zweier Rohrleitungsabschnitte zwangsläufig an dem dazwischen befindlichen Zusatz-Bauteil auftritt, führt daher nicht zu einer Verringerung der Schutzwirkung wie bei einem lediglich an der Oberfläche aufgetragenen wurzelhemmenden Stoff. Ein handelsübliches Herbizid, welches z. B. einem Elastomer-Werkstoff zugemischt werden kann, ermöglicht gegenüber anderen, vergleichbar wurzeihemmend wirksamen Stoffen eine deutlich bessere Beständigkeit gegen Auswaschen, z. B. eine zwischen 25-fach und 220-fach geringere Auswaschrate, wie praktische Versuche ergeben haben.

Neuere Erkenntnisse lassen darauf schließen, dass Wurzeln bevorzugt dorthin wachsen, wo dem Wurzelwachstum innerhalb des Erdreichs ein möglichst geringer Widerstand entgegengesetzt wird. Bei einer Rohrleitung, die aus mehreren Rohrleitungsabschnitten gebildet ist, von denen jeder Rohrleitungsabschnitt jeweils ein Spitzende und ein Muffenende aufweist, ist konstruktiv bedingt stets eine äußere Stoßfuge zwischen der Stirnfläche der Muffe und dem Spitzende vorgesehen. Die Dichtung ist stets im Abstand von der radial äußeren Mündung der äußeren Stoßfuge angeordnet. Von dieser Mündung der äußeren Stoßfuge ergibt sich somit eine umlaufende Nut, die bis zu der Dichtung reicht. Da bei der Verlegung einer Rohrleitung, insbesondere beim Einbringen einer Verfüllmasse, nicht darauf geachtet wird, diese umlaufende Nut auszufüllen, ergeben sich ausgerechnet an den Stellen der Rohrleitung, die gegenüber Eindringversuchen von Wurzeln besonders empfindlich sind, die für Wurzeln bevorzugten Wachstumsbedingungen.

Es kann daher vorteilhaft vorgesehen sein, einen regelrechten Fugenverschluss zu bewirken und diese vorerwähnte ringförmig umlaufende Nut zu verschließen.

Hierzu kann ein äußeres Fugenverschlussprofil vorgesehen sein, welches zusätzlich zu der Dichtung in der Nut bzw. Fuge angeordnet wird diese Fuge verschließt, also welches zwischen der äußeren Mündung der Fuge und der in der Fuge befindlichen Dichtung angeordnet ist, um das Vordringen von Wurzeln bis zur Dichtung zu verhindern. Die Dichtung kann daher frei von wurzelhemmenden Stoffen sein, so dass eine Belastung des in der Rohrleitung geführten Mediums mit aus der Dichtung ausgewaschenen wurzelhemmenden Stoffe zuverlässig ausgeschlossen ist.

Vorteilhaft kann das äußere Fugenverschlussprofil bis an die Mündung der Nut reichen bzw. an dieser Mündung angeordnet sein, so dass nicht nur die Dichtung vor den Wurzeln geschützt ist, sondern auch bereits das Eindringen von Wurzeln in die Nut verhindert wird. Somit kann verhindert werden, dass in der Nut befindliche Wurzeln wachsen und durch ihr Wachstum die beiden Rohrleitungsabschnitte auseinander drängen oder sprengen.

Vorteilhaft kann das äußere Fugenverschlussprofil die umlaufende Nut, also den Zwischenraum zwischen Rohrende und Spitzende, möglichst vollständig ausfüllen, also von deren äußerer Mündung bis zur Dichtung verlaufen, so dass auch bei einer zunächst teilweise eingedrungenen Wurzel deren weiteres Wachstum in Richtung der Dichtung und damit in den Innenraum der Rohrleitung möglichst stark behindert oder ganz ausgeschlossen wird.

Das Fugenverschlussprofil kann vorzugsweise leicht verformbar sein. Die leichte Verformbarkeit ermöglicht, dass das Fugenverschlussprofil beim Verbinden zweier Rohrleitungsabschnitte keinen hinderlichen Widerstand bietet, aber dennoch beiden Fugenrändern wurzeldicht anliegen kann.

Die leichte Verformbarkeit kann dadurch bewirkt werden, dass das Fugenverschlussprofil
■ als Hohlprofil ausgestaltet ist, z. B. mit einem etwa C-förmigen oder etwa Ω-förmigen Querschnitt,
■ oder als Hohlkammerprofil, mit einem allseits geschlossenen Querschnitt, und einem darin vorgesehenen Hohlraum,
■ mit mehreren Rippen, die z. B. an der Oberfläche des Profils vorgesehen sind oder die z. B. in Form eines etwa "tannenbaumartigen" Profilquerschnitts vorgesehen sind,
■ aus einem geschlossenporigen oder offenporigen Schaumwerkstoff besteht, also aus offenzelligen oder geschlossenzelligen Werkstoffen.
Insbesondere kommen auch offene Profilquerschnitte oder offenporige Schäume in Frage, denn diese ermöglichen eine besonders leichte, widerstandsarme Komprimierbarkeit des Profils, und eine Dichtungsfunktion muss das Fugenverschlussprofil nicht hinsichtlich eine Fluids erfüllen, sondern lediglich in der Hinsicht, dass das Eindringen von Wurzeln an dem Fugenvorschlussprofil vorbei verhindert wird.

Eine besonders zuverlässige Anbindung an zumindest einen der beiden benachbarten Rohrleitungsabschnitte kann dadurch bewirkt werden, dass das Fugenverschlussprofil während der Fertigung dieses Rohrleitungsabschnitts in an sich bekannter Weise im Material des Rohrleitungsabschnitts verankert wird und hierzu z. B. als Einleger in die Form des Rohrleitungsabschnitts eingebracht wird, bevor diese Form mit dem den Rohrleitungsabschnitt bildenden Material befüllt wird.

Alternativ dazu können - ohne Veränderungen im Herstellungsprozess zu erfordern - unverändert hergestellte, an sich bekannte Rohrleitungsabschnitte vor ihrer Verlegung mit einem Fugenverschlussprofil versehen werden. Insbesondere können ringförmige Fugenverschlussprofile auf einfache Weise auf das Spitzende eines Rohrleitungsabschnitts aufgezogen werden oder in ein Muffenende eines Rohrleitungsabschnitts eingelegt werden. Insbesondere können sie dabei an einen sogenannten Spiegel angelegt werden, so dass eine definierte Positionierung des Fugenverschlussprofils sichergestellt ist. Eine Sicherung des Fugenverschlussprofils an dem jeweiligen Rohrleitungsabschnitt kann durch Verklebung, Verschraubung, Formschluss in Art einer Nut-Feder-Verbindung oder dergleichen bewirkt werden.

Mit Hilfe der äußeren Fugenverschlussprofile können ansonsten unveränderte Rohrleitungen problemlos wurzelhemmend ausgestaltet werden. Diese wurzelhemmende Ausgestaltung kann bei der Verlegung neuer Rohrleitungen vorgesehen sein, bei der bekannte Rohrleitungsabschnitte aus z. B. Beton und bekannte Zusatzbauteile z. B. als Elastomerdichtungen unverändert verwendet werden und lediglich zusätzlich die wurzelhemmenden Fugenverschlussprofile verwendet werden, welche die Fuge gegen das Einwurzeln schützen. Ein optimaler Schutz des in der Rohrleitung geführten Medium gegen die wurzelhemmenden Substanzen ist durch ohnehin vorgesehene Elastomerdichtung gegeben.

Die wurzelhemmende Ausgestaltung mit Hilfe von äußeren Fugenverschlussprofilen kann auch nachträglich erfolgen, indem an jeder Verbindungsstelle einer bereits verlegten Rohrleitung ein Fugenverschlussprofil montiert wird, z. B. wenn die Rohrleitung aufgrund von ohnehin erfolgenden Wartungs- oder Reparaturarbeiten freigelegt wird.

Alternativ zu der Verwendung eines äußeren Fugenverschlussprofils kann ein inneres Fugenverschlussprofil vorgesehen sein, welches zusätzlich zu der Dichtung in der Nut bzw. Fuge angeordnet wird diese Fuge zum Medium hin verschließt, also welches zwischen der inneren Mündung der Fuge und der in der Fuge befindlichen Dichtung angeordnet ist, um das Medium von der Dichtung zu trennen. Im Gegensatz zu dem äußeren Fugenverschlussprofil muss das innere Fugenverschlussprofil daher die Nut flüssigkeitsdicht abdichten, so dass es als Sekundärdichtung bezeichnet werden kann. Es stellt jedoch im baurechtlichen Sinne keine Dichtung dar und muss dementsprechend nicht die überprüfbaren Eigenschaften einer Rohrleitungsdichtung aufweisen. Die eigentliche, im baurechtlichen Sinne vorgesehene und als Primärdichtung bezeichnete Dichtung kann bei Verwendung eines inneren Fugenverschlussprofils stark wirksam wurzelhemmend ausgestaltet sein, wobei dass innere Fugenverschlussprofil eine Belastung des in der Rohrleitung geführten Mediums mit wurzelhemmenden Stoffe aus der Dichtung verhindert, das diese Stoffe nicht mit dem Medium in Kontakt kommen und somit nicht in das Medium eingetragen werden können.

Vorteilhaft kann das innere Fugenverschlussprofil die umlaufende Nut möglichst vollständig ausfüllen, also von deren innerer Mündung bis zur Dichtung verlaufen, so dass eine besonders zuverlässige Abdichtung der Nut gegenüber dem in der Rohrleitung geführten Medium sichergestellt wird.

Es kann vorgesehen sein, sowohl ein äußeres als auch ein inneres Fugenverschlussprofil zu verwenden, so dass einerseits ein optimaler Schutz des Mediums gegenüber den wurzelhemmenden Stoffen und andererseits ein optimaler Schutz der Rohrleitung gegenüber den Wurzeln erzielbar ist. Dabei kann vorzugsweise die wurzelhemmende Wirkung von innen, dem in der Rohrleitung geführten Medium nahe, nach außen hin zunehmen.

Da den äußeren oder inneren Fugenverschlussprofilen keine Dichtungswirkung für die konstruktive Auslegung der Rohrleitung zukommt, sind sie nicht überprüfungspflichtig. Ohne den Aufwand, der mit einer Prüfung und Zulassung neuer Rohrleitungs-Materialien verbunden ist, können die Fugenverschlussprofile daher einfach als zusätzliche Elemente in einer ansonsten unveränderten Rohrleitungskonstruktion verwendet werden, die für sich genommen baurechtlich geprüft und zugelassen ist.

Das äußere oder innere Fugenverschlussprofil kann als geschlossener Ring ausgestaltet sein, z. B. für die werkseitige oder baustellenseitige Anbringung an einzelnen, noch nicht verlegten Rohrleitungsabschnitten. Insbesondere das äußere Fugenverschlussprofil kann als offener Ring ausgestaltet sein, der an einer bereits verlegten Rohrleitung montiert wird, oder es kann segmentiert ausgestaltet sein, mit zwei oder mehreren, leicht handhabbaren Einzelteilen, die an einer bereits verlegten Rohrleitung zu einem geschlossenen Ring zusammengesetzt werden können. Alternativ kann das Fugenverschlussprofil als Strang auf einer Rolle konfektioniert sein, von dem in Anpassung an den jeweiligen Rohrleitungsdurchmesser passende Stücke abgelängt werden, die wie ein offener Ring an einer bereits verlegten Rohrleitung montiert werden können.

Als wurzelhemmend bekannt sind bestimmte Herbizide sowie Kupfer, so dass im Rahmen des vorliegenden Vorschlages derartige wurzelhemmende Stoffe Verwendung finden können, ohne dass jedoch der vorliegende Vorschlag auf die Verwendung von Herbiziden oder Kupfer eingeschränkt ist.

Vorteilhaft kann ein Herbizid verwendet werden, welches dem Zusatz-Bauteil gleichmäßig verteilt beigemischt wird. Es hat sich in praktischen Versuchen herausgestellt, dass sich bei Verwendung von Elastomerwerkstoffen, denen ein handelsübliches Herbizid beigemischt wird, eine gute wurzelhemmende Wirkung ebenso wie eine sehr geringe Auswaschungsrate erzielen lässt, so dass z. B, bei Niederschlagsereignissen wie einem starken Regen aus landwirtschaftlichen Flächen erheblich mehr Herbizide in den Boden eingetragen werden als aus Rohrleitungen, deren Zusatz-Bauteile aus wurzelhemmend mit Herbiziden versehenen Elastomerwerkstoffen bestehen.

Für größere Ringquerschnitte ist es bekannt, ein Zusatzbauteil als extrudiertes Profil auszugestalten, z. B. in Form eines extrudierten Elastomerdichtungsprofils. Bei kleineren Ringquerschnitten, wie sie z. B. im Bereich der Hausanschlüsse mit Rohrleitungsdurchmessem von etwa 150 mm üblich sind, ist es hingegen kaum möglich, extrudierte Profile so stark zu verformen, dass sie entsprechend kleine Ringe bilden, und dass die beiden Enden des Profils an ihrer Nahtstelle zuverlässig verbunden bleiben. Für kleinere Durchmesser werden daher üblicherweise sogenannte Formteile verwendet, die z. B. in eine Form gegossen oder gepresst werden. Eine Koextrusion und dementsprechende Ausgestaltung als zweikomponentiges, extrudiertes Profil ist für Ringe kleinerer Durchmesser nicht möglich, so dass demgegenüber vorteilhaft die Beimischung eines wurzelhemmenden Stoffes bei einem einkomponentigen Zusatzbauteil auch die Möglichkeit eröffnet, es als Formteil, z. B. als einen Ring mit einem kleinen Durchmesser herzustellen.

Bei der Herstellung des Zusatz-Bauteils kann eine über dessen Querschnitt ungleichmäßige Verteilung der wurzelhemmenden Stoffe vorgesehen sein. Bei Herstellung z. B. eines extrudierten Profils kann vorgesehen sein, die wurzelhemmenden Stoffe z. B. mittels einer in den Elastomerstrom ragenden Düse lediglich an einer Stelle am Umfang der Dichtung einzubringen, so dass sich eine über den Dichtungsquerschnitt ungleichmäßige Verteilung der wurzelhammenden Stoffe ergibt. Bei Herstellung z. B. eines gegossenen Formteils kann vorgesehen sein, die wurzelhemmenden Stoffe z. B. zunächst in die Form einzugeben und anschließend das Haupt-Material - z. B. einen Elastomerwerkstoff - in die Form einzubringen.

Durch die ungleichmäßige Verteilung der wurzelhemmenden Stoffe kann an der Seite des Zusatzbauteils, welche zum Medium gerichtet ist, eine möglichst geringe Konzentration der wurzelhemmenden Stoffe erzielt werden, während an der zum Erdreich gerichteten Seite des Zusatzbauteils die Konzentration der wurzelhemmenden Stoffe deutlich höher sein kann.

Bei Verwendung des zusätzlichen Bauteils als Last- oder Druckübertragungsring in einem Schachtbauwerk kann Holz als Werkstoff verwendet werden. Die wurzelhemmende Ausgestaltung kann dadurch erfolgen, dass das Holz mit einem Herbizid imprägniert bzw. getränkt wird.

Ein Ausführungsbeispiel einer wurzelhemmend ausgestalteten Rohrleitung wird anhand der nachfolgenden, rein schematischen Zeichnung näher erläutert.

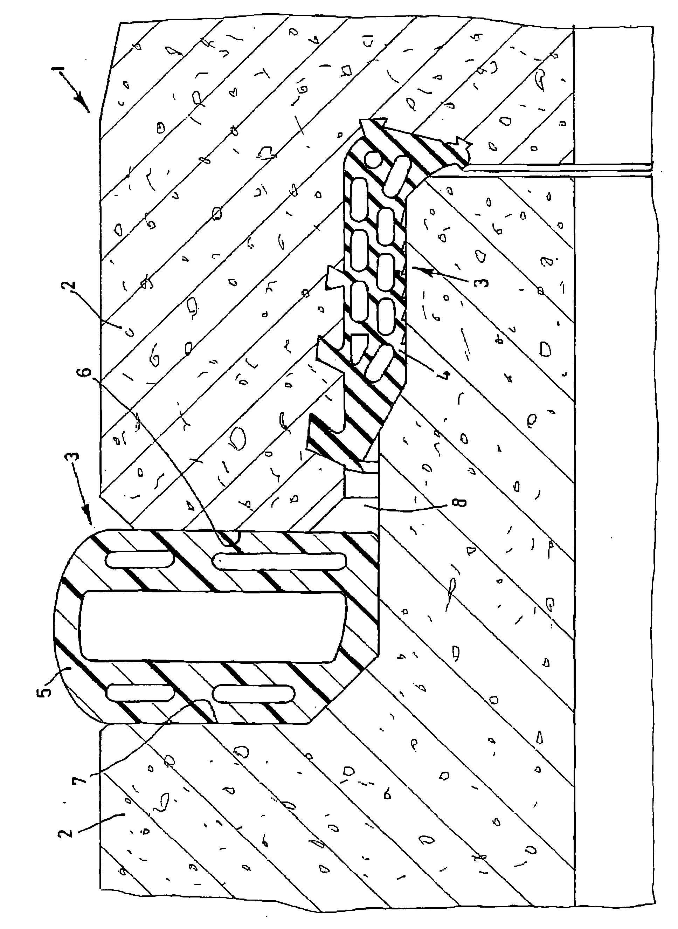

Dabei ist in der Zeichnung der lediglich ausschnittsweise dargestellte Verbindungsbereich einer Rohrleitung 1 dargestellt, wobei zwei Rohrleitungsabschnitte 2 teilweise dargestellt sind sowie zwei Zusatzbauteile 3 in Form einer umlaufenden Dichtung 4 sowie in Form eines ebenfalls umlaufenden Fugenverschlussprofils 5.

In an sich bekannter Weise bildet der rechts dargestellte Rohrleitungsabschnitt 2 ein Muffenende aus, während der links dargestellte Rohrleitungsabschnitt 2 ein mit dem Muffenende korrespondierendes Spitzende bildet, welches in das Muffenende eingeführt ist. In an sich bekannter Weise dient die Dichtung 4, die im Muffenabschnitt verankert ist, zur flüssigkeitsdichten Abdichtung der Rohrleitung 1 in diesem Verbindungsbereich.

Die Dichtung 4 ist aus fertigungstechnischen Gründen von der äußersten Stirnfläche 6 des Muffenendes beabstandet und weiterhin ist aus fertigungstechnischen Gründen ein Kontakt zwischen einem so genannten Spiegel 7 des Spitzendes mit dieser Stirnfläche 6 des Muffenendes nicht vorgesehen, so dass sich eine etwa L-förmige Nut 8 ergibt, die mit einem ersten Abschnitt radial zwischen der Stirnfläche 6 und dem Spiegel 7 verläuft, und die mit einem koaxial verlaufenden zweiten Abschnitt, der sich aufgrund des Durchmesserunterschiedes zwischen dem Spitzende und dem Muffenende ergibt, bis zur Dichtung 4 verläuft.

Innerhalb der Nut 8 ist das Fugenverschlussprofil 5 vorgesehen. Dieses wird vor der Verbindung der beiden Rohrleitungsabschnitte 2 auf das Spitzende des links dargestellten Rohrleitungsabschnittes 2 montiert und gegen den Spiegel 7 gepresst. Bei dem dargestellten Ausführungsbeispiel ist eine nachträgliche Montage des Fugenverschlussprofils 5 auf dem Spitzende des zunächst hergestellten Rohrleitungsabschnittes 2 möglich. Abweichend davon kann vorgesehen sein, das Fugenverschlussprofil 5 bereits während der Fertigung des Rohrleitungsabschnittes 2 anzubringen und - ähnlich wie dies bei der Dichtung 4 ersichtlich ist - in dem Spiegel 7 mittels entsprechender, am Fugenverschlussprofil 5 vorgesehener Vorsprünge zu verankern.

Während der Verbindung der beiden Rohrleitungsabschnitte 2 wird das Spitzende des einen in das Muffenende des korrespondierenden anderen Rohrleitungsabschnittes 2 eingeführt. Um eine optimale Wirkung der Dichtung 4 und ein vollständiges Eindringen des Spitzendes in das Muffenende zu gewährleisten, ist das Fugenverschlussprofil 5 nicht als Puffer ausgestaltet, welcher die Beweglichkeit des Spitzendes in das Muffenende hinein begrenzt. Vielmehr weist das Fugenverschlussprofil 5 eine Vielzahl von Hohlräumen auf, so dass es angesichts der Kräfte, die beim Einführen des einen in den anderen Rohrabschnitt 2 auftreten, vergleichsweise leicht verformbar ist. Diese Verformbarkeit stellt sicher, dass das Fugenverschlussprofil 5 zuverlässig wurzeldicht sowohl dem Spiegel 7 als auch der Stirnfläche 6 anliegt, so dass keine Spalten, Fugen oder dergleichen verbleiben, die das Vordringen von Wurzeln bis zur Dichtung 4 ermöglichen würden.

Gegebenenfalls kann abweichend von der vorbeschriebenen Ausgestaltung das Fugenverschlussprofil 5 auch bewusst als Anschlag oder Puffer ausgestaltet sein, der die Bewegung der beiden Rohrleitungsabschnitte 2 gegeneinander begrenzt, so dass eine besonders feste Anlage sowohl der Stirnfläche 6 als auch des Spiegels 7 an dem Fugenverschlussprofil 5 gewährleistet werden kann und damit ein Einwurzeln besonders zuverlässig ausgeschlossen werden kann.

Nicht nur das Fugenverschlussprofil 5 kann mit wurzelhemmenden Stoffen versehen sein, sondern auch das andere Zusatzbauteil 3 in Form der Dichtung 4, so dass eine mehrfache Sicherheit gegen das Eindringen von Wurzeln in die Rohrleitung 1 gegeben ist.

In ökologisch vorteilhafter Weise kann das in der Rohrleitung geführte Medium möglichst gering mit wurzelhemmenden Substanzen belastet werden. Zusätzlich dazu, dass Substanzen mit sehr geringer Auswaschrate verwendet werden, können in der Dichtung 4 aufgrund der wurzelhemmenden Wirkungsweise des Fugenverschlussprofils 5 schwächere oder geringer dosierte wurzelhemmende Stoffe verwendet werden. Zudem kann bei der Herstellung der Dichtung 4, welche extrudiert wird, vorgesehen sein, dass die wurzelhemmenden Stoffe z. B. mittels einer in den Elastomerstrom ragenden Düse lediglich an einer Stelle am Umfang der Dichtung eingebracht werden, so dass sich eine über den Dichtungsquerschnitt ungleichmäßige Verteilung der wurzelhemmenden Stoffe ergibt. An der zum Medium gerichteten Seite der Dichtung kann daher eine möglichst geringe Konzentration der wurzelhemmenden Stoffe erzielt werden, während an der zum Erdreich gerichteten Seite der Dichtung die Konzentration der wurzelhemmenden Stoffe deutlich höher sein kann.

Die beiden Rohrleitungsabschnitte können nicht nur längs hintereinander angeordnet sein, sondern auch winklig zueinander ausgerichtet sein, z. B. bei einer Y-förmigen Abzweigung oder bei einem T-förmigen Hausanschluss. Insbesondere bei einem T-förmigen Hausanschluss kann vorgesehen sein, die Rohrleitungsabschnitte in einem größeren zeitlichen Abstand herzustellen und z. B. eine Hausanschlussleitung aus Kunststoff mit einem Durchmesser von etwa 150 mm an einen erheblich älteren Beton-Rohrleitungsabschnitt mit einem erheblich größeren Durchmesser anzuschließen, indem zunächst eine entsprechende Bohrung in den Beton-Rohrleitungsabschnitt eingebracht wird.

## Patentansprüche

1. Erdverlegbare Rohrleitung,
mit wenigstens zwei Rohrleitungsabschnitten, zwischen denen sich eine Nut erstreckt,
wobei innerhalb der Nut ein wurzelhemmend ausgestaltetes Zusatz-Bauteil angeordnet ist,
**dadurch gekennzeichnet,**
**dass** das Zusatz-Bauteil (3) - wie eine Dichtung (4) oder wie ein Last- oder Druckübertragungselement - einkomponentig aus ein- und demselben Werkstoff besteht und mit einem gegen Auswaschungen weitgehend beständigen Zusatz versehen ist.

2. Rohrleitung nach Anspruch 1, **gekennzeichnet durch** einen wurzelhemmenden Stoff, der dem Zusatz-Bauteil (3) gleichmäßig verteilt beigemischt ist.

3. Rohrleitung nach Anspruch 2, **dadurch gekennzeichnet, dass** dem Zusatz-Bauteil (3) ein Herbizid beigemischt ist.

4. Rohrleitung nach einem der vorhergehenden Ansprüche,
**dadurch gekennzeichnet, dass** ein Rohrleitungsabschnitt (2) im Wesentlichen aus Beton besteht.

5. Rohrleitung nach einem der vorhergehenden Ansprüche,
**dadurch gekennzeichnet, dass** das Zusatz-Bauteil (3) im Wesentlichen aus Kunststoff besteht.

6. Rohrleitung nach einem der Ansprüche 1 bis 6,
**dadurch gekennzeichnet, dass** das Zusatz-Bauteil (3) im Wesentlichen aus einem Elastomer besteht.

7. Rohrleitung nach einem der Ansprüche 1 bis 6,
**dadurch gekennzeichnet, dass** das Zusatz-Bauteil (3) im Wesentlichen aus Holz oder einem Holwerkstoff besteht.

8. Rohrleitung nach einem der vorhergehenden Ansprüche,
**dadurch gekennzeichnet,**
**dass** zusätzlich zu einer innerhalb der Nut (8) vorgesehenen Dichtung (4) ein wurzelhemmendes Zusatz-Bauteil (3) angeordnet ist,
wobei das Zusatz-Bauteil (3) als ein äußeres Fugenverschlussprofil (5) ausgestaltet ist, welches innerhalb der Nut (8) auf der Seite der Dichtung (4) angeordnet ist, welche von dem in der Rohrleitung geführten Medium abgewandt ist.

9. Rohrleitung nach einem der vorhergehenden Ansprüche,
**dadurch gekennzeichnet,**
**dass** zusätzlich zu einer innerhalb der Nut (8) vorgesehenen Dichtung (4) ein wurzelhemmendes Zusatz-Bauteil (3) angeordnet ist,
wobei das Zusatz-Bauteil (3) als ein inneres Fugenverschlussprofil ausgestaltet ist, welches innerhalb der Nut (8) auf der Seite der Dichtung (4) angeordnet ist, welche dem in der Rohrleitung geführten Medium zugewandt ist.

10. Rohrleitung nach Anspruch 8 oder 9,
**dadurch gekennzeichnet,**
**dass** das Fugenverschlussprofil (5) die Nut (8) von ihrer Mündung bis zur Dichtung (4) vollständig ausfüllt.

11. Rohrleitung nach einem der Ansprüche Anspruch 8 bis 10,
**dadurch gekennzeichnet,**
**dass** das Fugenverschlussprofil (5) Hohlräume aufweist.

12. Rohrleitung nach Anspruch 11,
**dadurch gekennzeichnet,**
**dass** das Fugenverschlussprofil (5) als Hohlkammerprofil ausgestaltet ist.

13. Rohrleitung nach Anspruch 11,
**dadurch gekennzeichnet,**
**dass** das Fugenverschlussprofil (5) als Schaumkörper ausgestaltet ist.

14. Rohrleitung nach einem der Ansprüche 8 bis 13,
**dadurch gekennzeichnet,**
**dass** das Fugenverschlussprofil (5) an einem Spitzende des einen Rohrleitungsabschnitts (2) angeordnet ist.

15. Rohrleitung nach Anspruch 8 bis 14,
**dadurch gekennzeichnet,**
**dass** das Fugenverschlussprofil (5) einem umlaufenden Vorsprung - wie einem sogenannten Spiegel (7) - des Rohrleitungsabschnitts (2) anliegt.

16. Rohrleitung nach einem der vorhergehenden Ansprüche,
**dadurch gekennzeichnet,**
**dass** die beiden Rohrleitungsabschnitte winklig zueinander ausgerichtet sind - wie bei einer Y-förmigen Abzweigung oder bei einem T-förmigen Hausanschluss.

17. Rohrleitung nach einem der vorhergehenden Ansprüche,
**dadurch gekennzeichnet,**
**dass** das Zusatz-Bauteil (3) als extrudiertes Profil ausgestaltet ist.

18. Rohrleitung nach einem der Ansprüche 1 bis 16,
**dadurch gekennzeichnet,**
**dass** das Zusatz-Bauteil (3) als Formteil ausgestaltet ist.

19. Ringförmiges Rohrleitungs-Bauteil - wie eine Dichtung (4), ein Lastübertragungsring, ein Druckübertragungsring oder ein Fugenverschlussring - zur Montage in einer Fuge zwisehen zwei Rohrleitungsabschnitten,
wobei das Bauteil als Zusatz-Bauteil (3) nach einem der vorhergehenden Ansprüche ausgestaltet ist.
